# EUROPEAN PATENT SPECIFICATION

(11) **EP 1 714 106 B1**
(45) Date of publication and mention of the grant of the patent: **04.03.2009**
(21) Application number: 05810849.9
(22) Date of filing: 14.01.2005
(51) Int. Cl.: F42B 10/64, B64C 9/36

(54) **2-D PROJECTILE TRAJECTORY CORRECTION SYSTEM AND METHOD**
2-D-GESCHOSSFLUGBAHNKORREKTURSYSTEM UND -VERFAHREN
SYSTEME ET PROCEDE DE CORRECTION DE TRAJECTOIRE DE PROJECTILE EN DEUX DIMENSIONS

(30) Priority: 15.01.2004 US 758522
(43) Date of publication of application: 25.10.2006
(73) Proprietor: Raytheon Company, Waltham, Massachusetts 02451-1449 (US)
(72) Inventor: GESWENDER, Chris, E., Tucson, AZ 85754 (US); HINSDALE, Andrew, J., Oro Valley, AZ 85737 (US); BLAHA, George, A., Tucson, AZ 85745 (US); DRYER, Richard, Oro Valley, AZ 85737 (US)
(74) Representative: Jackson, Richard Eric
(86) International application number: PCT/US2005/001285
(87) International publication number: WO 2006/028485

(56) References cited:
- DE-A1- 19 845 611
- DE-C- 931 267
- US-A- 3 504 869
- US-A- 3 759 466
- US-A- 4 013 245
- US-A1- 2002 190 155

## Description

### BACKGROUND OF THE INVENTION

### Field of the Invention

This invention relates to launched projectiles in general, and specifically to a two-dimensional correction system and method for correcting the range and deflection errors in an unguided spin stabilized projectile.

### Description of the Related Art

Modem warfare is based on mission speed, high per round lethality, and low possibility of collateral damage. This requires high precision. Unguided artillery shells follow a ballistic trajectory, which is generally predictable but practically results in larger misses at ranges greater than 20 miles due to variations in atmospheric conditions; wind speed and direction, temperature and precipitation, and variations in the weapons system; manufacturing tolerances, barrel condition, propellant charge temperature and gun laying errors. As the ballistic range increases, the potential impact of the projectile variation grows until the projectile delivered lethality is too low to effectively execute the fire mission.

Precision in such weapons comes at a high cost. Fully guided rounds such as ERGM, XM982 and AGS LRLAP cost $25,000.00 to $40,000.00 a piece. These solutions are essentially a gun-fired guided missile that uses GPS/IMU technology to precision guide the missile to the target. Such high cost systems are not feasible to modify the millions of artillery rounds in the existing inventory or to be integrated into the design of new artillery rounds.

What is needed is a system that can provide in-flight projectile trajectory correction more simply and less expensively than a guided projectile. Preferably the system can be used to modify the existing inventory. The system should be safe from electronic jamming, which is likely in a combat environment. The system should improve accuracy so that the corrected projectiles can be used effectively for targets at ranges in excess of 20 miles.

There are a number of possible implementations that have been developed, typically as modifications to the fuze kit. These fall into the following categories of a 1D corrector; a kit that corrects either Down Range errors or Cross Range Errors or a 2D corrector, a kit that corrects both Down and Cross Range errors. Additionally, the 2D correctors can be implemented as a body fixed kit (where the kit rolls with the projectile body) or as a de-coupled kit, where the kit roll rate is different than the projectile body. The de-coupled 2D kit requires a roll bearing to de-couple the two elements.

The 1 D Down Range corrector works by estimating the downrange decrement given that a brake is deployed to increase projectile drag and alter the ballistic trajectory of the projectile. This is a one time deployment decision. If atmospheric conditions change, the brake cannot adjust. The brake is easy to implement but also suffers in that cross range errors (~100 m DEP) are not reduced. The brake requires a slight change to the ballistic firing tables because the projectile must be aimed past the target. The brake is compatible with TRUTH (current projectile location) being supplied by either GPS or a Data Link from an external tracking source. See U.S. Patent 6,310,335 for an example of a 1D Down Range corrector.

The 1D Cross Range corrector works by estimating the cross range adjustment possible if a reduction in the projectile average roll rate is implemented to alter the ballistic trajectory of the projectile. This is a one time deployment decision. If atmospheric conditions change, the system cannot adjust. A one-time deployment of a fin or canard is easily implemented but suffers in that down range errors (>100 m REP) are not reduced. A slight change to the ballistic firing tables are required because the projectile must be aimed left of but closer to the intended target. This approach is compatible with TRUTH being supplied by either GPS or a Data Link from an externally tracking source.

The two above concepts can be used together to implement a 2D corrector to alter the projectile's ballistic trajectory (see U.S. Patent 6,502,786). Each mechanism independently implements the appropriate deployment decision. Each individually is a one time deployment decision. If atmospheric conditions change after deployment, the system cannot adjust. This is an easily implementable system but suffers in that it requires a substantial change to the ballistic firing tables to be used operationally.

The de-coupled 2D corrector works by estimating both the down range and cross range adjustment possible if a change in the average projectile body angle of attack is implemented. This can be a continuous correction. These systems suffer in that the decoupling mechanism is bulky and the fuze outer mold line cannot follow the NATO STANAG shapes such that new and different ballistic firing tables are required to be used operationally. This system is also compatible with TRUTH being supplied by either GPS or a Data Link from and externally tracking source. See U.S. Patents 5,512,537; 5,775,636 and 5,452,864 for examples of 2D Cross Range correctors.

US Patent 6,474,593 discloses a projectile having a plurality of micro electromechanical devices disposed about the axis of flight for active control of the trajectory of the projectile. US Patent 3,504,869, which forms a basis for claims 1 and 6, discloses a fin-stabilised projectile having deployable control surfaces for creating lift in order to correct flight deviation.

There remains an acute and present need to provide a 2-D corrector for accurately correcting both the range and deflection errors inherent in an unguided spin stabilized projectile without having to modify the ballistic firing tables. The corrector should be simple, reliable, low power and inexpensive and capable of being retrofit to existing projectiles.

### SUMMARY OF THE INVENTION

The present invention provides a 2-D correction system for accurately correcting both the range and deflection errors inherent in an unguided spin stabilized projectile that can be used with existing ballistic firing tables and retrofitted to existing projectiles.

This is accomplished by intermittently deploying aerodynamic surfaces to develop a rotational moment, which create body lift that nudge the projectile in two-dimensions to correct the projectile in its ballistic trajectory. In low spin rate projectiles ("fin stabilized"), the rotational moment directly produces the body lift that moves the projectile. In high spin rate projectiles ("spin stabilized"), the rotational moment creates a much larger orthogonal precession that in turn produces the body lift that moves the projectile.

The aerodynamic surfaces are suitably deployed over multiple partial roll cycles at precise on (deployed) and off (stowed) positions in the cycle to nudge the projectile up or down range or left or right cross range until the desired ballistic trajectory is restored. Full downrange and crossrange control in all directions allows for the use of existing firing tables. A fuze kit can be modified with a simple deployment mechanism and a pair of canards to retrofit existing projectiles. The 2-D corrector can be implemented as a body fixed or de-coupled kit, fixed or variable canard angle or attack, fixed or proportional canard deployment, continuous or windowed control to target, and forebody, mid-body or tail canard placement

In an exemplary embodiment, a body fixed 2-D corrector includes a pair of pivot mounted canards and a deployment mechanism such as a voice coil with a centripetal spring incorporated into a modified fuze kit for attachment to a standard projectile. The canards are held at a fixed angle of attack and are either stowed or fully deployed. When stowed, the canards do not affect the ballistic trajectory. When deployed the canards create the rotational moment, hence lift that nudge the projectile. A TRUTH receiver such as GPS or a data link is incorporated into the kit's electronics to provide the current position of the projectile. A flight computer estimates deviations in the cross range and down range vectors to target are detected soon after launch and apogee, respectively, determines precisely when and how many times the canards must be deployed and stowed in partial roll cycles and controls the deployment mechanism accordingly. The flight computer may maintain continuous control to target of the intermittent deployment to keep the projectile on its ballistic trajectory or may make windowed adjustments early on for crossrange variations, after apogee for downrange variations and then once again at a certain time to target for both cases if required by a power budget.

The correcting method of the present invention is defined in appended claim 1. Further preferred method features are defined in subclaims 2-5. The 2-D corrector according to the present invention is defined in claim 6. Further preferred features of the corrector are defined in subclaims 7-11.

These and other features and advantages of the invention will be apparent to those skilled in the art from the following detailed description of preferred embodiments, taken together with the accompanying drawings, in which: .

### BRIEF DESCRIPTION OF THE DRAWINGS

FIG. 1 is a perspective view of an artillery shell having a modified fuze kit with a 2-D body fixed correction system in accordance with the present invention;
FIGs. 2a and 2b are section views of the modified fuze kit illustrating voice coil and centripetal spring mechanisms for intermittently deploying the canards to provide two-dimensional correction;
FIG. 3 is a system block diagram of the modified fuze kit;
FIG. 4 shows the effective angle of attack of the modified fuze kit and canards when deployed;
FIGs. 5a and 5b are moment diagrams that illustrate the reaction of high and low spin rate projectile to the creation of a rotating moment by deployment of a canard;
FIGs. 6a and 6b are plots of a control signal in the time domain and attitude domain;
FIG.7 is a two-dimensional plot of a corrected ballistic trajectory and projectile dispersion;
FIG. 8 is a flowchart illustrating the use of the 2-D corrector system;
FIGs. 9a and 9b are plots of a projectile's 2-D corrected ballistic trajectory using continuous-to-target and windowed-to-target control; and
FIGs. 10a and 10b are diagrams of a 2-D corrector system implemented as mid-body wings and tail fins.

### DETAILED DESCRIPTION OF THE INVENTION

The present invention provides a 2-D correction system for accurately correcting both the range and deflection errors inherent in an unguided spin stabilized projectile (artillery shells, missiles, EKVs) that can be used with existing ballistic firing tables and retrofitted to existing projectiles. This is accomplished by intermittently deploying aerodynamic surfaces to develop a rotational moment, which creates body lift that nudges the projectile in two-dimensions to return the projectile to its ballistic trajectory. In spin stabilized projectiles, the rotational moment causes a much larger orthogonal precession, which in turn moves the projectile. The aerodynamic surfaces are suitably deployed over multiple partial roll cycles at precise on (deployed) and off (stowed) positions in the cycle to nudge the projectile up or down range or left or right cross range until the desired ballistic trajectory is restored.

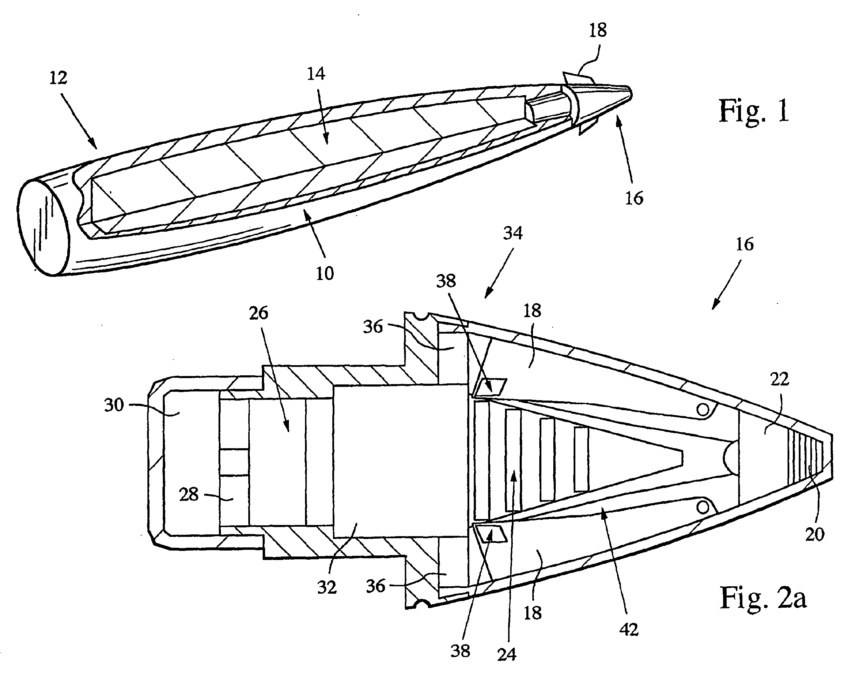

As shown in figure 1, an unguided spin stabilized projectile **10** includes a steel housing **12** and an explosive payload **14.** A fuze kit **16** is threaded onto the housing. A standard fuze kit includes a fuse, a safe and arm mechanism, battery, an initialization coil and a flight computer. High spin rate projectiles are stabilized gyroscopically, i.e. by the spinning of the projectile itself. Low spin rate projectiles are stabilized by the addition of fins to the airframe. As modified to provide 2-D correction, the fuze kit includes at least one canard **18** (shown here in deployed position), a deployment mechanism and a TRUTH receiver for providing the position and velocity vector of the projectile on its ballistic trajectory to the target. In general, this design allows different types of fuse kits, e.g. timed fuses, impact fuse, and delayed impact fuses, to be used with a standard housing and payload. The incorporation of the 2-D correction in the fuze kit allows the millions of projectiles in inventory to be easily retrofit. The 2-D corrector can be implemented as a body fixed or de-coupled kit, fixed or variable canard angle or attack, fixed or proportional canard deployment, continuous or windowed control to target, and forebody, mid-body or tail canard placement.

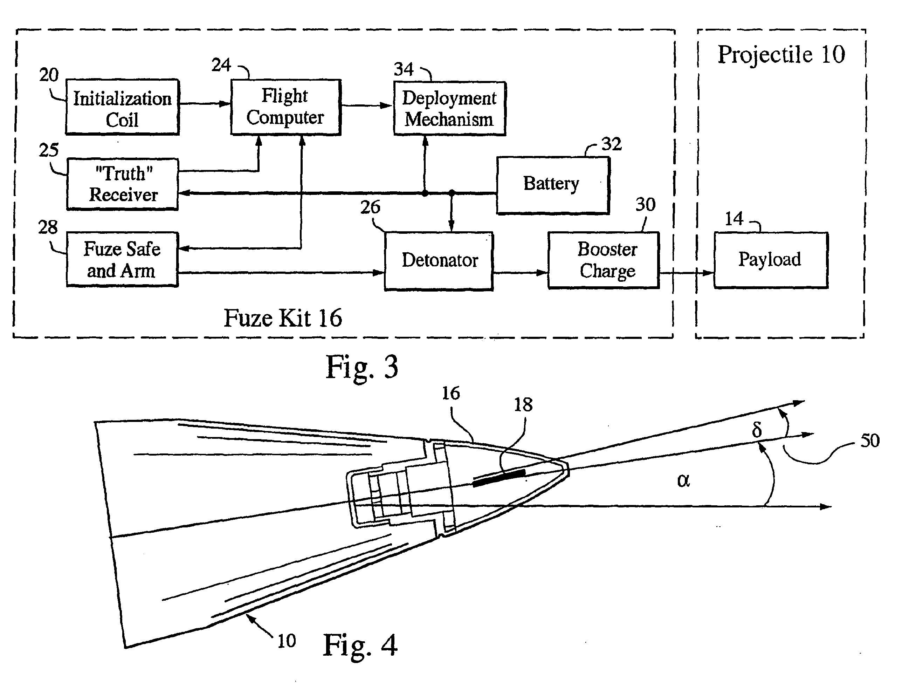

As illustrated in section views of a modified fuze kit **16** (figures 2a-2b) and a system block diagram (figure 3), modified fuze kit **16** includes the standard functionality provided by an initialization coil **20,** an HOB sensor **22,** a flight computer **24,** a detonator **26,** a safe and arm device **28,** a booster charge **30,** and a battery **32.** Initialization coil **20** serves as an AC-coupled input port through which an artilleryman can quickly, roughly and safely program the fuze detonation instructions into the flight computer **24.** For example, detonate on impact, detonate x seconds prior to impact, detonate when altitude is less than y feet, etc. HOB sensor **22** provides the information, e.g. altitude, to the flight computer that initiates the detonation sequence. The illustrated projectile, as is typical of most projectiles, includes three separate explosive charges: the payload **14,** detonator **26,** which is a primer charge that does not have enough energy to set off the payload, and a booster charge **30** that does have enough energy to ignite the payload. To prevent accidental detonation, the detonator **26** and booster charge **30** are separated by the safe and arm device **28.** Ordinarily, the safe and arm device is rotated ninety degrees to isolate the detonator **26** from the booster charge **30.** The flight computer initiates detonation by rotating the safe and arm device thereby providing a channel from the detonator to the booster charge. Immediately thereafter, the flight computer sets off detonator **26** sending sparks and flame through the safe and arm device to set off booster charge **30,** which in turn bums hot and with sufficient energy to ignite the payload **14.**

The modified fuze kit **16** further includes at least one pivot mounted canard **18** and a deployment mechanism **34.** Flight computer **24** is provided with a TRUTH receiver **25,** e.g. a GPS receiver, and programmed to execute a flight control algorithm to control the intermittent deployment of canards **18** to nudge the projectile to its ballistic trajectory.

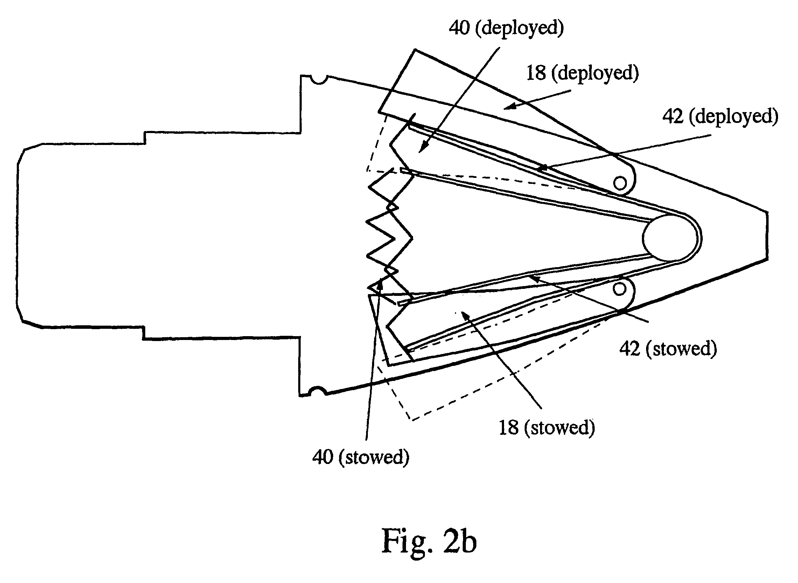

In an exemplary embodiment, the deployment mechanism **34** includes a voice coil **36** and surface forcing magnets **38** on the canards. The flight computer **24** alternately generates command signals that energizes voice coil **36** thereby creating an electromagnetic field that interacts with the surface forcing magnet's permanent magnetic fields to produce a repulsive force that drives the canards outward to a deployed position as shown in figure 2b and then produces an attractive force that pulls the canards inward to a stowed position as shown in figure 2a. Other mechanism such as hydraulic, pneumatic or combination thereof may be employed to deploy the canards. The voice coil mechanism is particularly attractive because it provides both the precise control required to intermittently deploy and store the canards and the efficiency required to operate on a tight power budget. The canards may be moved between deployed and stowed positions or may be deployed proportionally to change the amount of force to the projectile.

To further enhance power efficiency, the deployment mechanism **34** may include a centripetal spring **40** that balances the centrifugal force on the canards caused by rotation of the projectile. Without the spring the voice coil **36** would have to remain energized to produce an attractive force to prevent the canards from deploying, which would be very in efficient. However, the centrifugal force decreases as the spin rate is reduced. Consequently, at lower spin rates the voice coil would have to produce a larger repulsive force to overcome the difference between the centripetal spring force and the centrifugal force, again reducing power efficiency. To mitigate this problem, a deployment spring **42** is unlocked when the spin rate falls below a threshold to counter the centripetal spring **40.** Ideally, the voice coil **36** should only need to be activated to deploy and stow the canards and then only with sufficient force to accelerate their mass and not to overcome either the centrifugal force or the centripetal spring force.

As shown in figure 4, to generate lift the boresight **50** of the projectile must form an angle of attack α with respect to the wind. Tilting the canards **18** at an angle δ creates an effective angle of attach α_{δ} = α + δ that generates more lift. For simplicity the canard angle δ is suitably fixed although it may be movable to provide another degree of control. Note, because the rotation of the projectile causes an apparent wind angle, lift can be generated even if the canard angle is zero.

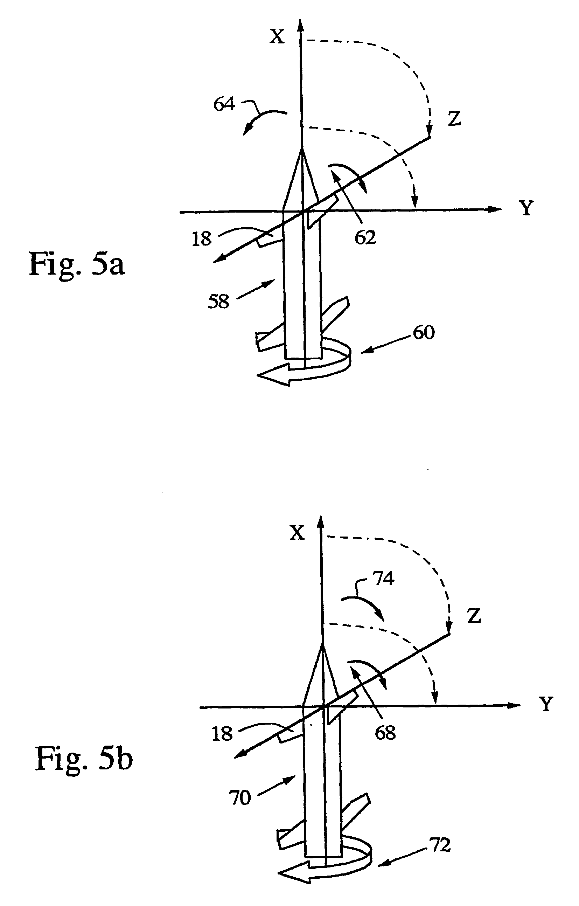

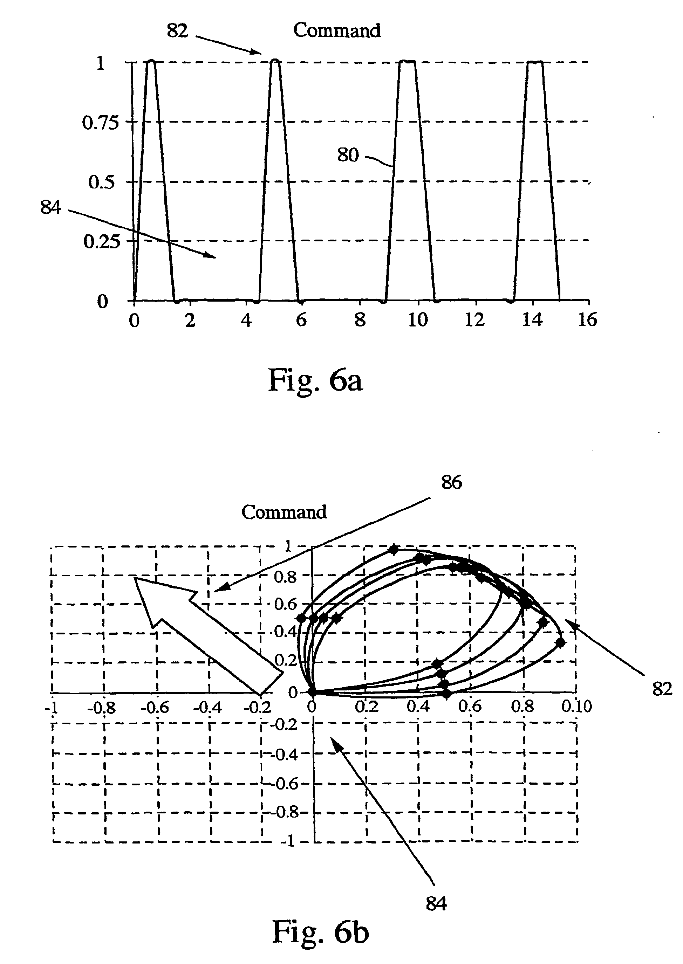

As illustrated in figures 5 and 6, the flight computer intermittently deploys and then stows aerodynamic surfaces to develop rotational moments, which create body lift that nudge the projectile in two-dimensions to correct the projectile in its ballistic trajectory. These techniques use the physics of rotating projectiles to their advantage as compared to conventional air-brakes that fight against the physics of ballistic projectiles by creating drag to reduce projectile velocity or slow the roll rate of the projectile. The current technique is more efficient and more precise.

As shown in figure 5a, canards **18** are for purposes of illustrating the physics of the control system instantaneously deployed in the XZ plane with the canards (mass m) canted towards the negative Y axis to produce a rotating moment V **62** in the XY plane. A spin stabilized projectile **58** with a high roll rate Ω **60** about the X axis will, to a first order approximation, react to the rotating moment **62** in the XY plane by precessing **64** in the XZ plane in response to a coriolis acceleration Fc, i.e. Fc = -2mVx Ω. The command and resulting body angles, Φ_{cmd} and Φ_{body}, measured with respect to each other and are 0° and 90°, respectively. This is a highly efficient technique because the amount of precession caused by the physics of spinning projectiles is >>100 times larger than the rotating moment. Thus, very quick deployments of the canards can nudge the projectile on to its ballistic trajectory.

As shown in figure 5b, canards **18** are for purposes of illustrating the physics of the control system instantaneously deployed in the XZ plane with the canards canted towards the negative Y axis to produce a rotating moment **68** in the XY plane. A fin stabilized projectile **70** with a low roll rate **72** about the X axis will, to a first order approximation, react to the rotating moment **68** in the XY plane by rotating **74** in the XY plane. The command and resulting body angles, Φ_{cmd} and Φ_{body}, measured with respect to each other and are 0° and 0°, respectively. Although not as efficient as the creation of precession, this approach is still an improvement over conventional air brakes that control the projectile using drag. Thus, very quick deployments of the canards can nudge the projectile on to its ballistic trajectory.

As shown in figures 6a and 6b, the canards are not and cannot be deployed and stowed instantaneous. In practice, the canards are deployed and stowed over multiple partial roll cycles of the projectile, suitably within a single quadrant, to precess or "nudge" the projectile in the desired direction to correct for downrange or crossrange errors in the projectile's trajectory. Deployment over a full roll cycle would cancel out any precession and simply cause drag. As shown in figure 6a, the flight computer issues a command signal **80** at a precise time to move the canards to a deployed state **82** and rescinds the command at a precise time to move the canards to a stowed state **84.** The flight computer issues the command signal over a plurality of cycles until the projectile is moved to its desired ballistic trajectory at which point the canards are stowed until further correction is required. Figure 6a shows the representation of a stream of the command signals about the roll axis. The signals induce a projectile body motion **86** in a direction normal to the average force.

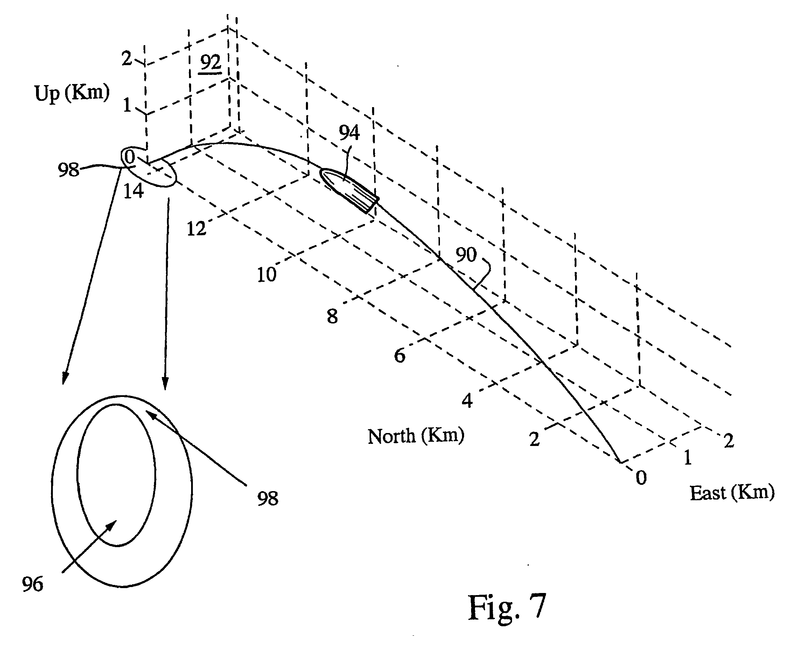

In order to balance the requirements of full and precise 2D control of the projectile to the target against the reality of a limited power budget, intermittent deployment can be done in a couple ways. A projectile's ballistic trajectory **90** in a base frame **92** is shown in figure 7. The projectile **94** is fired in accordance with a standard firing table for that projectile, range, wind conditions etc. Note, that high spin rate projectiles that rotate in a clockwise direction will naturally precess to the right so they must be aimed to the left of the target. As illustrated, the projectile's ballistic trajectory 90 will have a statistical dispersion **96,** typically +/- 150 m downrange and +/- 50 m crossrange for a 14 Km launch, based on variations in the projectiles, firing conditions, and changes in wind and other atmospherics. To use the existing firing tables, the 2D control mechanism must be (a) able to adjust in all four directions and (b) able to provide a total guidance correction **98** that encompasses the projectile dispersion **96.**

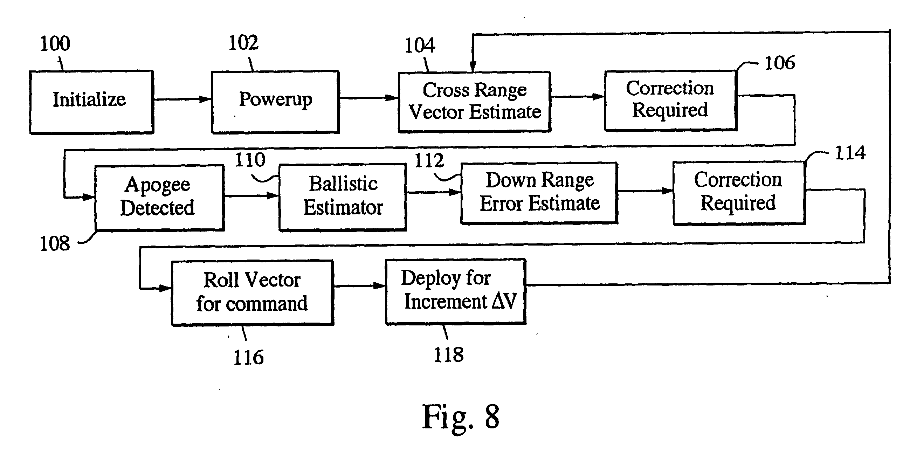

Figure 8 illustrates an exemplary control sequence that the flight computer **24** may execute to intermittently deploy the canard(s) to nudge the projectile to its ballistic trajectory. The flight computer is initialized (step **100**) to load mission data and is powered up (step **102)** from the battery when fired from the cannon. Shortly after launch, the flight computer makes a cross range vector estimate (step **104**) by comparing the projectile's current position and attitude provided by, for example, a GPS/IMU system to the target coordinates in accordance with the firing table and determines whether correction is required (step **106**)**.** The flight computer checks to determine whether apogee has been detected (step **108**)**.** If so, the computer estimates the range based on current ballistic trajectory (step **110**), calculates a down range error estimate (step **112**), and determines whether correction is required (step **114**)**.** The computer generates the appropriate roll vector for command to cause the desired precessed body motion (step **116**) and then controls the canards to deploy for an increment ΔV, typically in one quadrant, starting at a precise time (step **118**) to nudge the projectile back towards its ballistic trajectory. The canards are deployed repeatedly until the projectile is back on its trajectory. If apogee is not detected, the computer controls the canards just to compensate for crossrange errors.

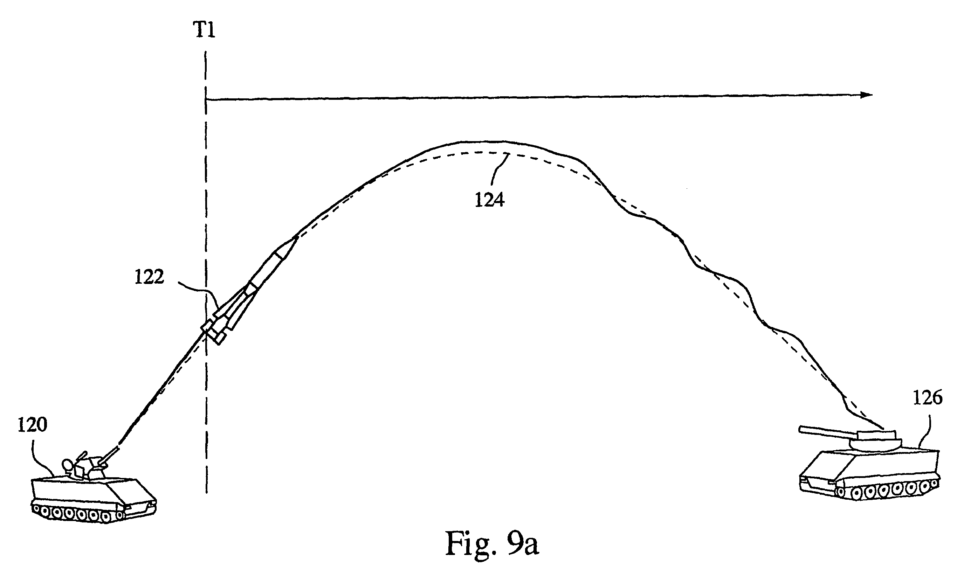

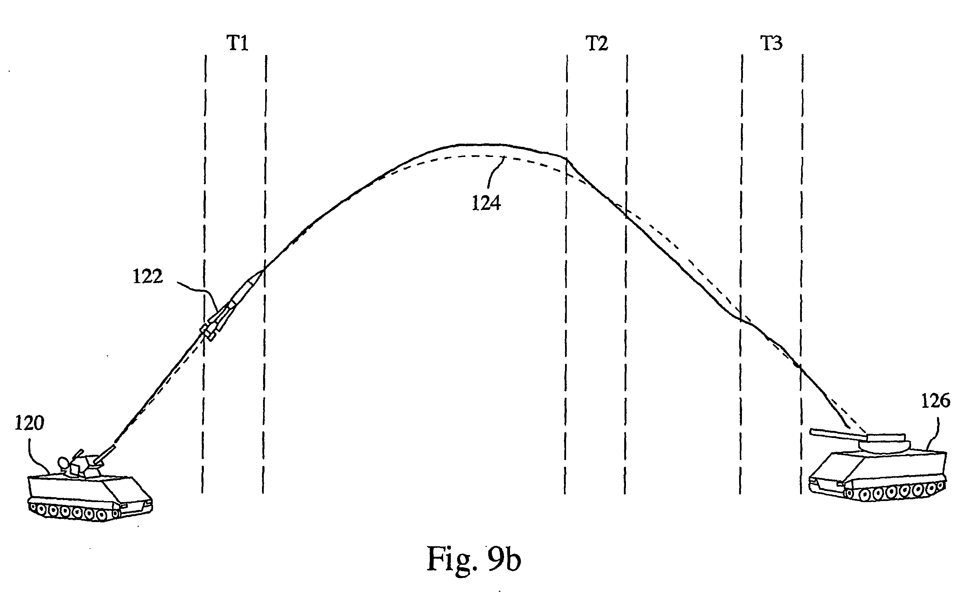

As shown in figure 9a, a weapons system **120** launches a projectile **122** on a ballistic trajectory **124** according to an existing firing table towards a target **126.** The flight computer is powered up at a time T1 immediately after launch and maintains continuous control throughout the rest of the flight until the projectile impacts the target. This approach provides maximum control but does require continuous power to determine and make any necessary corrections. Alternately, as shown in figure 9b, the flight computer may be powered up shortly after launch for a time increment ΔT1 to make initial adjustments for crossrange variations, again after apogee at a time increment ΔT2 to make initial corrections for downrange variations and then once again (or more) at a certain time to target for a time increment ΔT3. This approach should provide adequate control and will use less power.

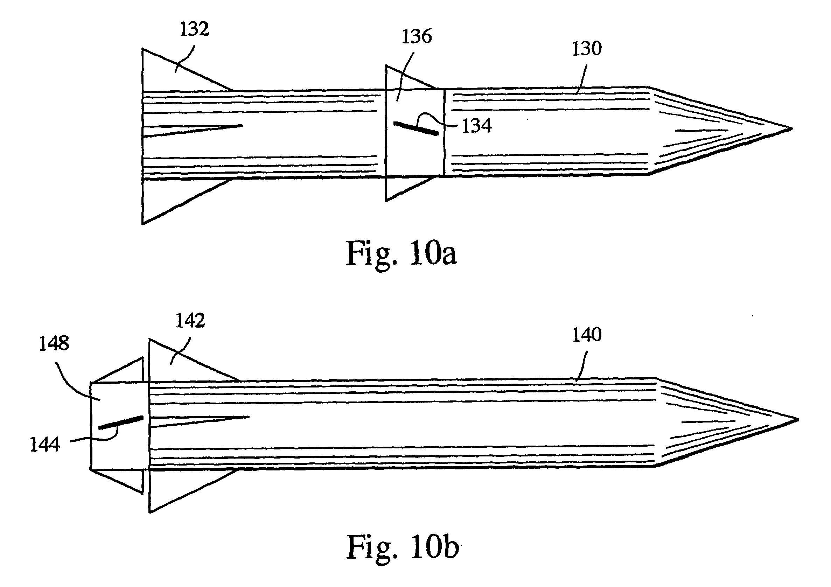

The 2-D corrector system has been described in detail with reference to spin stabilized projectiles and specifically designed into a modified fuze kit. Alternative systems may be applicable to missiles, EKVs and other fin-stabilized weapons systems. As shown in figure 10a, an airframe **130** has tail fins **132** that provide stabilization. In this case, the kit deploys the surfaces as wings **134** in a mid-body assembly **136** to provide correction. As shown in figure 10b, an airframe **140** has tail fins **142** that provide stabilization. In this alternative case, the kit implements the surfaces as fins **144** in a tail assembly **146** to provide correction.

While several illustrative embodiments of the invention have been shown and described, numerous variations and alternate embodiments will occur to those skilled in the art. For example, although the invention has been described in the context of a "body fixed" fuze kit it could also be implemented in a decoupled configuration. Such variations and alternate embodiments are contemplated, and can be made without departing from the scope of the invention as defined in the appended claims.

## Claims

1. A method for correcting the range and deflection errors in an unguided spin stabilized spinning projectile **(10)** in which deviations of the spinning projectile from a desired ballistic trajectory in a downrange dimension **(112)** and a crossrange dimension **(104)** are determined, the method comprising**:**
intermittently deploying **(82)** and stowing **(84)** at least one aerodynamic surface **(18)** on the spinning projectile within a single quadrant of a roll cycle at a command angle for multiple roll cycles thereby forming multiple partial roll cycles each within the single quadrant that develop a sequence of rotational moments **(62, 68),** said spinning projectile reacting to the sequence of rotational moments to cause a precession **(64, 74, 86)** of the projectile, the moment of which is greater than one hundred times larger than the rotational moments at a body angle approximately ninety degrees to the command angle to correct for the crossrange and downrange deviations from the projectile's desired ballistic trajectory **(90).**

2. The method of claim 1, wherein the aerodynamic surface is intermittently deployed **(82)** and stowed **(84)** in the single quadrant of a roll cycle at the command angle by issuing a command signal **(80)** at a first time within the single quadrant to deploy the aerodynamic surface and by rescinding the command at a second time within the single quadrant to stow the aerodynamic surface over multiple roll cycles to form the multiple partial roll cycles.

3. The method of claim 1 or claim 2, wherein the aerodynamic surface (18) is intermittently deployed **(82)** and stowed **(84)** in the single quadrant of a roll cycle for a uniform increment ΔV.

4. The method of any claim 1-3, wherein the aerodynamic surface (18) is intermittently fully deployed **(82)** and fully stowed **(84)** in the single quadrant of a roll cycle.

5. The method of any claim 1-4, wherein the aerodynamic surface is intermittently deployed in a first window (**T1**) soon after launch to correct for deviations in the crossrange dimension, in a second window **(T2)** soon after the projectile passes apogee to correct for deviations in the downrange dimension, and in a third **(T3)** window at a time-to-target to correct for deviations in the crossrange and downrange dimensions.

6. A 2-D corrector for correcting the range and deflection errors in an unguided spin stabilized spinning projectile **(10)** including at least one aerodynamic surface **(18)** on the spinning projectile moveable between stowed and deployed positions; and a receiver **(25)** for receiving the position of the projectile, said 2-D corrector comprising:
a deployment mechanism **(34)** for moving the aerodynamic surface between said stowed and deployed positions in response to a command signal **(80);** and
a flight computer **(24)** that determines deviations from a desired ballistic trajectory **(90)** in a downrange dimension and a crossrange dimension and over a plurality of roll cycles issues the command signal **(80)** at a first time within a single quadrant of the roll cycle to cause the deployment mechanism to deploy **(82)** at a command angle the at least one aerodynamic surface and rescinds the command signal **(80)** at a second time within the single quadrant to cause the deployment mechanism to stow **(84)** the at least one aerodynamic surface to develop a sequence of rotational moments **(62),** said spinning projectile reacting to said sequence of rotational moments to cause a precession **(64, 74, 86)** of the projectile, the moment of which is greater than one hundred times larger than the rotational moments at a body angle approximately ninety degrees to the command angle to correct for the crossrange and downrange deviations from the projectile's desired ballistic trajectory.

7. The 2-D corrector of claim 6, wherein the deployment mechanism comprises:
a voice coil **(36),** and
a permanent magnet **(38)** on each of said at least one aerodynamic surface.

8. The 2-D corrector of claim 7, wherein the deployment mechanism further comprises:
a centripetal spring **(40)** that substantially offsets a centrifugal force on the aerodynamic surface caused by the rotation of the projectile; and
a deployment spring **(42)** that is unlocked if the rotation of the projectile falls below a predetermined rate to partially offset the centripetal spring force.

9. The 2-D corrector of claim 6, wherein the aerodynamic surface, deployment mechanism, receiver and flight computer are integrated in a fuze kit **(16)** for use with a projectile.

10. The 2-D corrector of any claim 6-9, wherein the aerodynamic surface **(18)** is intermittently deployable **(82)** and stowable **(84)** in the single quadrant of a roll cycle for a uniform increment ΔV.

11. The 2-D corrector of any claim 6-10, wherein the at least one aerodynamic surface **(18)** on the spinning projectile is moveable between a fully stowed and a fully deployed position in response to said command signal **(80).**

## Patentansprüche

1. Verfahren zum Korrigieren der Strecken- und Seitenabweichungsfehler in einem führungslosen drallstabilisierten Drallgeschoss (10), in dem Abweichungen des Drallgeschosses von einer gewünschten ballistischen Flugbahn in einer Längsstreckensausdehnung (112) und einer Querstreckenausdehnung (104) ermittelt werden, wobei das Verfahren Folgendes aufweist:
intermittierendes Ausfahren (82) und Einziehen (84) mindestens einer aerodynamischen Fläche (18) auf dem Drallgeschoss innerhalb eines einzelnen Quadranten eines Rollzyklus auf einen Befehlswinkel über mehrere Rollzyklen, wodurch mehrere Teilrollzyklen jeweils innerhalb des Einzelquadranten gebildet werden, welche eine Sequenz von Rotationsmomenten (62, 68) erzeugen, wobei das genannte Drallgeschoss auf die Sequenz von Rotationsmomenten reagiert, um eine Präzession (64, 74, 86) des Geschosses herbeizuführen, dessen Moment über einhundert Mal größer ist als die Rotationsmomente bei einem Körperangriffswinkel von annähernd 90° bezüglich des Befehlswinkels, um die Querstrecken- und die Längsstreckenabweichungen von der gewünschten ballistischen Flugbahn des Geschosses zu korrigieren.

2. Verfahren nach Anspruch 1, wobei die aerodynamische Fläche intermittierend im Einzelquadranten eines Rollzyklus auf den Befehlswinkel ausgefahren (82) und eingezogen (84) wird, und zwar durch Abgeben eines Befehlssignals (80) an einem ersten Zeitpunkt innerhalb des Einzelquadranten, um die aerodynamische Fläche auszufahren, und durch Aufheben des Befehls an einem zweiten Zeitpunkt innerhalb des Einzelquadranten, um die aerodynamische Fläche einzufahren, und zwar über mehrere Rollzyklen, um die mehreren Teilrollzyklen zu bilden.

3. Verfahren nach Anspruch 1 oder 2, wobei die aerodynamische Fläche (18) im Einzelquadranten eines Rollzyklus intermittierend ausgefahren (82) und eingezogen (84) wird, um einen gleichmäßigen Zuwachs ΔV zu erhalten.

4. Verfahren nach einem der Ansprüche 1 bis 3, wobei die aerodynamische Fläche (18) in dem Einzelquadranten eines Rollzyklus intermittierend voll ausgefahren (82) und voll eingezogen (84) wird.

5. Verfahren nach einem der Ansprüche 1 bis 4, wobei die aerodynamische Fläche intermittierend ausgefahren wird, und zwar in einem ersten Zeitfenster (T1) kurz nach dem Start, um Abweichungen in der Querstreckenausdehnung zu korrigieren, in einem zweiten Zeitfenster (T2) kurz nachdem das Geschoss das Apogäum passiert hat, um Abweichungen in der Längsstreckenausdehnung zu korrigieren, und in einem dritten Fenster (T3) bis zum Erreichen des Ziels, um Abweichungen in der Querstrecken- und der Längsstreckenausdehnung zu korrigieren.

6. 2-D-Korrigierer zum Korrigieren der Strecken- und Seitenabweichungsfehler in einem führungslosen drallstabilisierten Drallgeschoss (10) mit mindestens einer aerodynamischen Fläche (18) auf dem Drallgeschoss, welche bewegbar zwischen eingezogenen und ausgefahrenen Positionen ist, und einem Empfänger (25) zum Empfangen der Position des Geschosses, wobei der genannte 2-D-Korrigierer Folgendes aufweist:
ein Ausfahrsystem (34) zum Bewegen der aerodynamischen Fläche zwischen den genannten eingezogenen und ausgefahrenen Positionen als Antwort auf ein Befehlsignal (80); und
einen Flugcomputer (24), welcher Abweichungen von einer gewünschten ballistischen Flugbahn (90) in einer Längsstreckenausdehnung und einer Querstreckenausdehnung über eine Vielzahl von Rollzyklen ermittelt, das Befehlsignal (80) an einem ersten Zeitpunkt innerhalb eines Einzelquadranten des Rollzyklus erteilt, um das Ausfahrsystem zu veranlassen die mindestens eine aerodynamische Fläche auf einen Befehlswinkel auszufahren (82), und das Befehlsignal (80) an einem zweiten Zeitpunkt innerhalb des Einzelquadranten aufhebt, um das Ausfahrsystem zu veranlassen die mindestens eine aerodynamische Fläche einzuziehen, um eine Sequenz von Rotationsmomenten (62) zu erzeugen, wobei das genannte Drallgeschoss auf die genannte Sequenz von Rotationsmomenten reagiert, um eine Präzession (64, 74, 86) des genannten Geschosses herbeizuführen, dessen Moment über einhundert Mal größer ist als die Rotationsmomente bei einem Körperangriffswinkel von annähernd 90° bezüglich des Befehlswinkels, um die Querstrecken- und die Längsstreckenabweichungen von der gewünschten ballistischen Flugbahn des Geschosses zu korrigieren.

7. 2-D-Korrigierer nach Anspruch 6, wobei das Ausfahrsystem Folgendes aufweist:
eine Schwingspule (36), und
einen Permanentmagnet (38) auf jeder der genannten mindestens einen aerodynamischen Fläche.

8. 2-D-Korrigierer nach Anspruch 7, wobei das Ausfahrsystem ferner Folgendes aufweist:
eine Zentripetalfeder (40), welche im Wesentlichen eine Zentrifugalkraft auf die aerodynamische Fläche ausgleicht, die durch die Rotation des Geschosses herbeigeführt wird; und
eine Ausfahrfeder (42), welche freigegeben wird, wenn die Rotation des Projektils unter eine vorbestimmte Rate fällt, um die Zentripetalfederkraft teilweise auszugleichen.

9. 2-D-Korrigierer nach Anspruch 6, wobei die aerodynamische Fläche, das Ausfahrsystem, der Empfänger und der Flugcomputer in einer Zündeinrichtung (16) zur Verwendung mit einem Geschoss integriert sind.

10. 2-D-Korrigierer nach einem der Ansprüche 6 bis 9, wobei die aerodynamische Fläche (18) im Einzelquadranten eines Rollzyklus intermittierend ausgefahren (82) und eingezogen (84) wird, um einen gleichförmigen Zuwachs ΔV zu erhalten.

11. 2-D-Korrigierer nach einem der Ansprüche 6 bis 10, wobei die mindestens eine aerodynamische Fläche (18) auf dem Drallgeschoss als Antwort auf das genannte Befehlsignal (80) bewegbar zwischen einer voll eingezogenen und einer voll ausgefahrenen Position ist.

## Revendications

1. Méthode pour corriger les erreurs de distance et de déflexion dans un projectile giratoire stabilisé à giration non guidée (10) dans laquelle des écarts du projectile giratoire par rapport à une trajectoire balistique souhaitée dans une dimension aval (112) et une dimension de déport latéral (104) sont déterminés, la méthode comprenant les étapes consistant à :
déployer (82) et escamoter (84) en intermittence au moins une surface aérodynamique (18) sur le projectile giratoire au sein d'un secteur de quadrant unique d'un cycle de roulis à un angle de commande pour de multiples angles de roulis, formant ainsi de multiples cycles de roulis partiels chacun au sein du secteur de quadrant qui développent une séquence de moments de rotation (62, 68), ledit projectile giratoire réagissant à la séquence de moments de rotation pour entraîner une précession (64, 74, 86) du projectile, dont le moment est plus de cent fois supérieur aux moments de rotation à un angle du corps d'approximativement quatre-vingt-dix degrés par rapport à l'angle de commande pour corriger les écarts de déport latéral et aval par rapport à la trajectoire balistique souhaitée du projectile.

2. Méthode selon la revendication 1, dans laquelle la surface aérodynamique est déployée (82) et escamotée (84) en intermittence dans le secteur de quadrant unique d'un cycle de roulis à l'angle de commande en émettant un signal de commande (80) à un premier instant au sein du secteur de quadrant unique pour déployer la surface aérodynamique et en annulant la commande à un second instant au sein du secteur de quadrant unique pour escamoter la surface aérodynamique sur de multiples cycles de roulis pour former les multiples cycles de roulis partiels.

3. Méthode selon la revendication 1 ou la revendication 2, dans laquelle la surface aérodynamique (18) est déployée (82) et escamotée (84) en intermittence dans le secteur de quadrant unique d'un cycle de roulis pour un incrément uniforme ΔV.

4. Méthode selon l'une quelconque des revendications 1 à 3, dans laquelle la surface aérodynamique (18) est déployée (82) et escamotée (84) en intermittence dans le secteur de quadrant unique d'un cycle de roulis.

5. Méthode selon l'une quelconque des revendications 1 à 4, dans laquelle la surface aérodynamique est déployée en intermittence dans une première fenêtre (T1) juste après le lancement pour corriger des écarts dans la dimension de déport latéral, dans une deuxième fenêtre (T2) juste après que le projectile passe l'apogée pour corriger des écarts dans la dimension aval, et une troisième fenêtre (T3) à un temps jusqu'à l'objectif pour corriger des écarts dans les dimensions de déport latéral et aval.

6. Correcteur 2D pour corriger les erreurs de distance et de déflexion dans un projectile giratoire stabilisé à giration non guidée (10) comprenant au moins une surface aérodynamique (18) sur le projectile giratoire mobile entre une position escamotée et une position déployée, et un récepteur (25) pour recevoir la position du projectile, ledit correcteur 2D comprenant :
■ un mécanisme de déploiement (34) pour déplacer la surface aérodynamique entre lesdites positions escamotée et déployée en réponse à un signal de commande (80) ; et
■ un ordinateur de vol (24) qui détermine des écarts par rapport à une trajectoire balistique souhaitée (90) dans une dimension aval et une dimension de déport latéral et sur une pluralité de cycles de roulis émet le signal de commande (80) à un premier instant au sein d'un secteur de quadrant unique du cycle de roulis pour faire en sorte que le mécanisme de déploiement déploie (82) à un angle de commande l'au moins une surface aérodynamique pour développer une séquence de moments de rotation (62), ledit projectile giratoire réagissant à ladite séquence de moments de rotation pour entraîner une précession (64, 74, 86) du projectile, dont le moment est plus de cent fois supérieur aux moments de rotation à un angle du corps d'approximativement quatre-vingt-dix degrés par rapport à l'angle de commande pour corriger les écarts de déport latéral et aval par rapport à la trajectoire balistique souhaitée du projectile.

7. Correcteur 2D selon la revendication 6, dans lequel le mécanisme de déploiement comprend une bobine acoustique (36) et un aimant permanent (38) sur chacune de ladite au moins une surface aérodynamique.

8. Correcteur 2D selon la revendication 7, dans lequel le mécanisme de déploiement comprend en outre :
■ un ressort centripète (40) qui compense sensiblement une force centrifuge sur la surface aérodynamique entraînée par la rotation du projectile ; et
■ un ressort de déploiement (42) qui est déverrouillé si la rotation du projectile tombe en dessous d'une certaine vitesse pour compenser partiellement la force du ressort centripète.

9. Correcteur 2D selon la revendication 6, dans lequel la surface aérodynamique, le mécanisme de déploiement, le récepteur et l'ordinateur de vol sont intégrés dans un kit de fusée de proximité (16) destiné à être utilisé avec un projectile.

10. Correcteur 2D selon l'une quelconque des revendications 6 à 9, dans lequel la surface aérodynamique (18) peut être déployée (82) et escamotée (84) en intermittence dans le secteur de quadrant unique d'un cycle de roulis pour un incrément uniforme ΔV.

11. Correcteur 2D selon l'une quelconque des revendications 6 à 10, dans lequel l'au moins une surface aérodynamique (18) sur le projectile giratoire est mobile entre une position complètement escamotée et complètement déployée en réponse audit signal de commande (80).
